# EUROPEAN PATENT APPLICATION

(11) **EP 3 584 302 A1**
(43) Date of publication of application: **25.12.2019**
(21) Application number: 17896991.1
(22) Date of filing: 20.12.2017
(51) Int. Cl.: C10B 39/02

(54) **COKE DRY QUENCHING PLANT**

(30) Priority: 14.02.2017 JP 2017024604
(71) Applicant: JP Steel Plantech Co., Yokohama Kanagawa 222-0033 (JP)
(72) Inventor: MITSUI, Shohei, Yokohama-shi Kanagawa 222-0033 (JP)
(74) Representative: Horn Kleimann Waitzhofer Patentanwälte PartG mbB
(86) International application number: PCT/JP2017/045634
(87) International publication number: WO 2018/150721

(57) **Abstract**

A high-yield coke dry quenching facility is provided that uses a traverser system and can nevertheless operate in short charge cycle time.

A coke dry quenching facility (1) according to the present invention quenches and cools red-hot coke discharged from a coke oven (5), on coke discharge-side of which front-of-oven rails (3) are laid, and recovers waste heat. The coke dry quenching facility (1) includes a quenching tower (7), a first and second front-of-oven car (11, 13) for transporting a bucket (9) for receiving red-hot coke, a first hoist tower (15), a first hoist (17), a first traverser (19), a second hoist tower (21), a second hoist (23), a second traverser (25), and top travel rails (27), and is configured to be able to charge red-hot coke into the quenching tower (7) alternately from a bucket (9) hoisted through the first hoist tower (15) and from a bucket (9) hoisted through the second hoist tower (21).

## Description

### Technical Field

The present invention relates to a coke dry quenching facility, in which red-hot coke produced by carbonizing coal in a coke oven is conveyed to and quenched in a coke quenching tower.

### Background Art

In a coke dry quenching (CDQ) facility, red-hot coke produced by carbonizing coal in carbonization chambers of a coke oven is pushed out of the coke oven through openings of the coke oven and is received by a conveying bucket on a car that travels on quenching car rails laid along the coke oven.

The conveying bucket having received red-hot coke is mounted on the car and transported to a hoist tower, and then hoisted to a position higher than the coke quenching tower. The hoisted conveying bucket is moved and positioned over the coke quenching tower and the red-hot coke in the conveying bucket is charged into the coke quenching tower. The red-hot coke charged into the coke quenching tower is quenched by circulating gas and the sensible heat is recovered in the form of steam.

As described above, the conveying bucket having received red-hot coke is mounted on the car and transported to the hoist tower. A traverser system described in the BACKGROUNG ART section of Patent Document 1, for example, is available as a transporting means. The traverser system is a system, in which a hoist tower is placed a little apart from a coke oven and traverser equipment for transporting a carriage carrying a conveying bucket to the hoist tower is installed, so that the system accompanies horizontal movement of the carriage in the direction away from the quenching car rails laid along the coke oven.

### Prior Art Document

### Patent Document

[Patent Document 1] Japanese Patent Application Publication No. 2012-102253 (JP 2012-102253 A)

### Summary of Invention

### Problems to be Solved by the Invention

In the case of the traverser system, the conveying bucket is moved in the direction away from the quenching car rails and therefore, no interference with other apparatuses occurs when the conveying bucket is hoisted. Furthermore, there is no need to place the quenching tower immediately close to the quenching car rails, so that it is possible to obtain a high degree of freedom in laying out the entire CDQ facility, such as where the quenching tower is positioned.

However, in the case of the traverser system, the conveying bucket is laterally moved and then hoisted, so that the time (conveying bucket transportation time) taken from when the conveying bucket receives red-hot coke from the coke oven to when the conveying bucket is transported and positioned over the quenching tower to charge the red-hot coke into the quenching tower, is long. This causes a problem that the cycle time (charge cycle time) for charging red-hot coke from the conveying bucket into the quenching tower increases.

The required processing capacity of a CDQ facility is determined from the yield of the coke oven that is the subject of processing. Specifically, the required processing capacity is determined from the number of oven chambers of the coke oven to be processed per unit time and the amount of coke discharged from an oven chamber of the coke oven in consideration of actual operation time.

Once the number of oven chambers to be processed per unit time is determined, the charge cycle time is also determined. However, when it is demanded to increase the processing capacity of the quenching tower, the necessity or requirement to reduce the charge cycle time arises as restrictions because the required charging frequency per unit operation time increases. Especially when it is required to adopt the traverser system (add traverser equipment) for reasons of layout of the entire CDQ facility, it becomes more difficult to increase the size of the quenching tower because the conveying bucket transportation time increases.

The present invention has been made to solve such a problem and an object of the present invention is to provide a coke dry quenching facility, with which it is possible to reduce charge cycle time and also realize a large capacity facility even when the traverser system is adopted.

### Means for Solving the Problem

(1) A coke dry quenching facility according to the present invention is a coke dry quenching facility for quenching and cooling red-hot coke discharged from a coke oven, on coke discharge-side of which front-of-oven rails are laid, and recovering waste heat, the coke dry quenching facility including:
   a quenching tower placed at a position away from the front-of-oven rails on the coke discharge-side of the coke oven;
   a first front-of-oven car and a second front-of-oven car, each of which is configured to run on the front-of-oven rails in a state where a sub-carriage carrying a bucket for receiving the red-hot coke is mounted thereon;
   a first hoist tower placed at a first hoist position adjacent to the quenching tower, the first hoist tower having guide rails extending in a vertical direction;
   a first hoist that has a first hoisting device and a first travelling trolley, the first hoisting device being configured to be able to hoist the bucket to a position higher than a top portion of the quenching tower along the guide rails of the first hoist tower, the first travelling trolley being configured to transport the hoisted bucket to a charging position set over the top portion of the quenching tower in a state where the hoisted bucket is hung;
   a first traverser that has first traverser rails laid between the front-of-oven rails and the first hoist position, the first traverser being configured to transfer the sub-carriage carrying the bucket to and from the first front-of-oven car or the second front-of-oven car on the front-of-oven rails at a first transfer position and configured to cause the sub-carriage carrying the bucket to travel on the first traverser rails between the first transfer position and the first hoist position;
   a second hoist tower placed at a second hoist position adjacent to the quenching tower on a side opposite to the first hoist position with respect to the quenching tower, the second hoist tower having guide rails extending in the vertical direction;
   a second hoist that has a second hoisting device and a second travelling trolley, the second hoisting device being configured to be able to hoist the bucket to a position higher than the top portion of the quenching tower along the guide rails of the second hoist tower independent of the first hoist, the second travelling trolley being configured to transport the hoisted bucket to the charging position set over the top portion of the quenching tower in a state where the hoisted bucket is hung;
   a second traverser that has second traverser rails laid between the front-of-oven rails and the second hoist position, the second traverser being configured to transfer the sub-carriage carrying the bucket to and from the first front-of-oven car or the second front-of-oven car on the front-of-oven rails at a second transfer position and configured to cause the sub-carriage carrying the bucket to travel on the second traverser rails between the second transfer position and the second hoist position; and
   top travel rails installed only between the top portion of the first hoist tower and the top portion of the second hoist tower, the top travel rails enabling the first traveling trolley and the second travelling trolley to travel to the charging position set over the top portion of the quenching tower, wherein
   the coke dry quenching facility is configured to charge all of the red-hot coke in the bucket hoisted through the first hoist tower and the red-hot coke in the bucket hoisted through the second hoist tower into the quenching tower during normal operation, and
   the coke dry quenching facility is configured so that, when it becomes necessary to stop one of a first hoist tower-side bucket transporting system and a second hoist tower-side bucket transporting system, the coke dry quenching facility is operated by charging red-hot coke into the quenching tower from the bucket transported through the other of the first hoist tower-side bucket transporting system and the second hoist tower-side bucket transporting system.
(2) In the coke dry quenching facility according to the above item (1), each of the first hoist and the second hoist is a rope trolley-type hoist.
(3) In the coke dry quenching facility according to the above item (1) or (2), the first hoist position, the quenching tower, and the second hoist position are arranged in a line parallel with the front-of-oven rails in plan view.
(4) In the coke dry quenching facility according to any one of the above items (1) to (3), a distance between the first transfer position and the second transfer position is set so that the first front-of-oven car and the second front-of-oven car do not interfere with each other when the first front-of-oven car and the second front-of-oven car stop at the first transfer position and the second transfer position respectively at the same time.
(5) In the coke dry quenching facility according to the above item (4), each of the first front-of-oven car and the second front-of-oven car has two carriages connected to each other, each of which is configured so as to be able to mount a sub-carriage thereon, and
   the distance between the first transfer position and the second transfer position is set equal to or greater than three times of a distance between centers of the carriages connected to each other.
(6) In the coke dry quenching facility according to any one of the above items (1) to (5), the quenching tower has a processing capacity equal to or greater than 160 t/h.
(7) In the coke dry quenching facility according to any one of the above items (1) to (6), each of the first hoist and the second hoist has a metal hanger for supporting the bucket when the bucket is hoisted, wherein the metal hanger has a roof portion to be positioned over the bucket, a pair of arm portions for holding the bucket, which extend downward from the roof portion, and pulleys provided on the roof portion, wherein a direction of connection between the pair of arm portions and an axial direction of each of rotary shafts of the pulleys are orthogonal to each other in plan view.

### Effects of the Invention

In the present invention, the coke dry quenching facility is configured so that, during normal operation, red-hot coke in the bucket hoisted through the first hoist tower and the red-hot coke in the bucket hoisted through the second hoist tower are all charged into the quenching tower. As a result, a high-yield coke dry quenching facility is provided that uses a traverser system and can nevertheless operate in short charge cycle time. Furthermore, the facility is configured so that, when it becomes necessary to stop one of the bucket transporting systems, that is, one of the first hoist tower-side system and the second hoist tower-side system, it is possible to operate the facility by charging red-hot coke into the quenching tower from the bucket transported through the other of the bucket transporting systems, that is, the other of the first hoist tower-side system and the second hoist tower-side system. For this reason, even in the case where a trouble occurs in one of the bucket transporting systems or in the case where one of the bucket transporting systems is inspected, for example, although the charging frequency is lowered, it is possible to continue operation with the use of the other of the bucket transporting systems.

### Brief Description of Drawings

[FIG. 1] FIG. 1 is a plan view of a coke dry quenching facility according to an embodiment of the present invention.
[FIG. 2] FIG. 2 is a perspective view of the coke dry quenching facility shown in FIG. 1 except for a quenching tower.
[FIG. 3] FIG. 3 is an explanatory diagram of a first front-of-oven car and a bucket to be used in the coke dry quenching facility shown in FIG. 2.
[FIG. 4] FIG. 4 is an enlarged view (No. 1) showing in an enlarged manner the bucket hung by a first metal hanger used in the coke dry quenching facility shown in FIG. 2.
[FIG. 5] FIG. 5 is an explanatory diagram for explaining a configuration of first movable pulleys and arm portions of the first metal hanger used in the coke dry quenching facility shown in FIG. 2.
[FIG. 6] FIG. 6 is an enlarged view (No. 2) partially showing in an enlarged manner top portions of a first hoist tower and a second hoist tower of the coke dry quenching facility shown in FIG. 2.
[FIG. 7] FIG. 7 is an explanatory diagram for explaining an arrangement of fixed pulleys.
[FIG. 8] FIG. 8 is an explanatory diagram for explaining a distance between a first transfer position and a second transfer position of the coke dry quenching facility according to the embodiment of the present invention.
[FIGS. 9A and 9B] FIGS. 9A and 9B show explanatory diagrams of charge cycle time of the coke dry quenching facility according to the embodiment of the present invention.

### Embodiments for Carrying Out the Invention

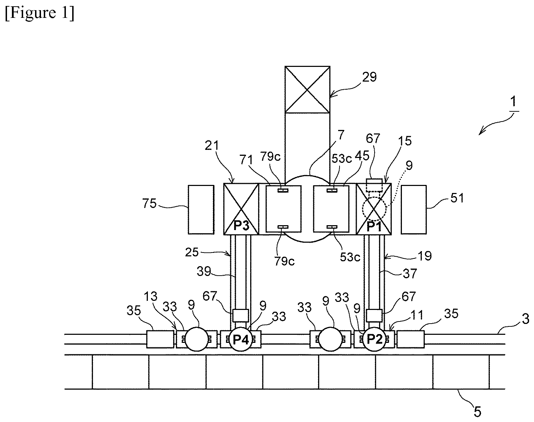

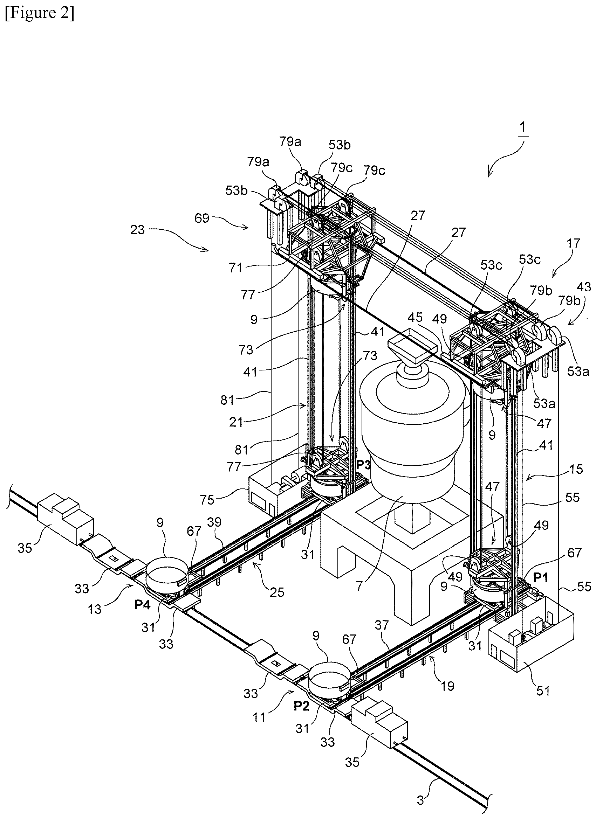

A coke dry quenching facility 1 according to an embodiment of the present invention will be described with reference to drawings. The coke dry quenching facility 1 quenches and cools red-hot coke discharged from a coke oven 5, on the coke delivery side of which front-of-oven rails 3 are laid, and recovers waste heat. As shown in FIGS. 1 and 2, the coke dry quenching facility 1 includes: a quenching tower 7; a first front-of-oven car 11 and a second front-of-oven car 13, each of which transports a bucket 9 receiving the red-hot coke; a first hoist tower 15; a first hoist 17; a first traverser 19; a second hoist tower 21; a second hoist 23; a second traverser 25; and top travel rails 27, and is configured to be capable of charging red-hot coke into the quenching tower 7 alternately from the bucket 9 hoisted through the first hoist tower 15 and the bucket 9 hoisted through the second hoist tower 21.

Each constituent element will be described in detail below.

### <Quenching Tower>

The quenching tower 7 is placed at a position apart from the front-of-oven rails 3 on the coke delivery side of the coke oven 5.

The quenching tower 7 is configured so that red-hot coke is sequentially charged into the quenching tower 7 through a top portion thereof, the charged red-hot coke is quenched by circulating gas blown in through a lower portion of the quenching tower 7, and the coke, from which heat is recovered, is sequentially discharged through a bottom portion of the quenching tower 7. The heat collected in the quenching tower 7 is recovered in the form of steam by a boiler 29 (see FIG. 1) placed adjacent to the quenching tower 7.

In a coke dry quenching facility, to which the traverser system is applied as a bucket transporting system, when a plurality of quenching towers are provided in order to increase the yield, the number of auxiliary facilities, such as accompanying boilers, also increases, so that the time taken to maintain such auxiliary facilities also increases. In the present invention, the increase of yield is realized not by providing a plurality of quenching towers but by a facility including a quenching tower. As a result, it is possible to suppress the increase in the maintenance time caused by the increase of yield.

While there is no particular limitation on the processing capacity of the quenching tower 7, use of a quenching tower with a high processing capacity (processing amount per unit time is large) makes it possible to process red-hot coke discharged from a large volume coke oven in a quenching tower, which red-hot coke could not be processed without using a plurality of quenching towers. The present invention is particularly effective when the traverser system is applied as a bucket transporting system to a quenching tower with a high processing capacity. For this reason, it is preferable that the quenching tower 7 have a processing capacity equal to or greater than 160 t/h.

### <First Front-of-Oven Car and Second Front-of-Oven Car>

The first front-of-oven car 11 and the second front-of-oven car 13 run on the front-of-oven rails 3 in a state where sub-carriages 31 carrying the buckets 9 for receiving red-hot coke are mounted on the first front-of-oven car 11 and the second front-of-oven car 13.

As shown in FIGS. 1 to 3, each of the first front-of-oven car 11 and the second front-of-oven car 13 of this embodiment includes two carriages 33 connected to each other, each of which is configured so as to be able to mount a sub-carriage 31 thereon. Each of the first front-of-oven car 11 and the second front-of-oven car 13 is pulled by a locomotive 35 and runs on the front-of-oven rails 3. However, the first front-of-oven car 11 and the second front-of-oven car 13 of the present invention are not limited to two-carriage trains.

The sub-carriages 31 to be mounted on the first front-of-oven car 11 and the second front-of-oven car 13 are transported in a state of being mounted on the first front-of-oven car 11 and the second front-of-oven car 13, and also run on first traverser rails 37 of the first traverser 19 and on second traverser rails 39 of the second traverser.

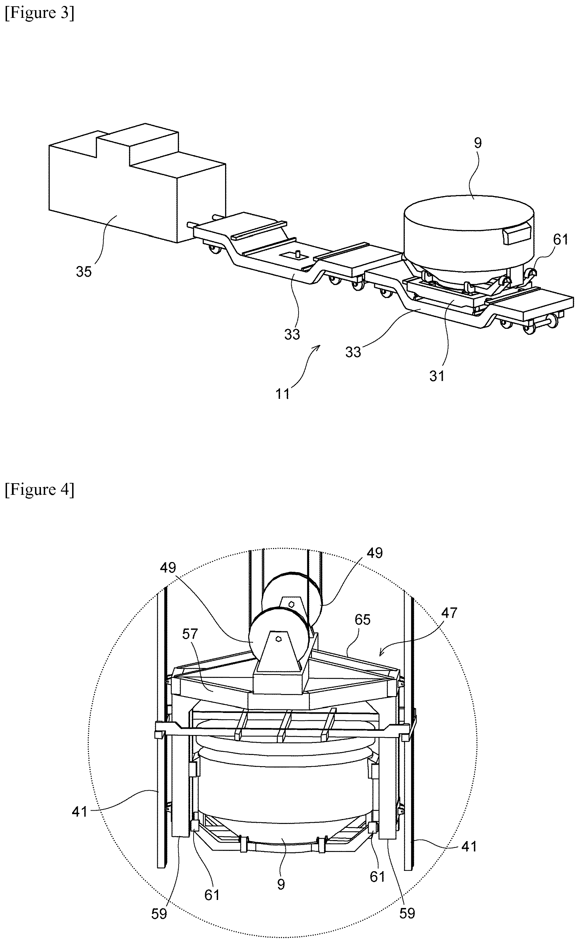

Both end portions of a bottom gate of the bucket 9 to be mounted on the sub-carriage 31 are support portions 61 to be used when the bucket is hoisted. As shown in FIG. 3, during a hoist, the support portions 61 are supported by arm portions 59 (see FIG. 4) of a metal hanger 47 to be described later.

### <First Hoist Tower>

The first hoist tower 15 is placed at a first hoist position P1 adjacent to the quenching tower 7 and is provided with guide rails 41 extending in the vertical direction.

The tower top portion of the first hoist tower 15 is fitted with first fixed pulleys 53a of the first hoist 17 and second fixed pulleys 79b of the second hoist 23 to be described later.

In FIG. 2, part of the first hoist tower 15 other than the tower top portion and the guide rails 41 are omitted.

### <First Hoist>

The first hoist 17 of this embodiment is a rope trolley-type hoist as described in Japanese Patent No. 3233044, including: a first hoisting device 43 configured to be able to hoist the bucket 9 to a position higher than a top portion of the quenching tower 7 along the guide rails 41 of the first hoist tower 15; and a self-propelled, first travelling trolley 45 that transports the hoisted bucket 9 to a charging position set over the top portion of the quenching tower 7 by travelling on the top travel rails 27 in a state where the hoisted bucket 9 is hung.

The first hoisting device 43 includes: a first metal hanger 47 that holds the bucket 9; first movable pulleys 49 fitted to an upper portion of the first metal hanger 47; a first hoist driving device 51 that is installed near a lower portion of the first hoist tower 15; the first fixed pulleys 53a fitted to the tower top portion of the first hoist tower 15; first fixed pulleys 53b fitted to a tower top portion of the second hoist tower 21; first fixed pulleys 53c fitted to an upper portion of the first travelling trolley 45; and first wire ropes 55 that are wound around the pulleys and reeled in and out by the first hoist driving device 51.

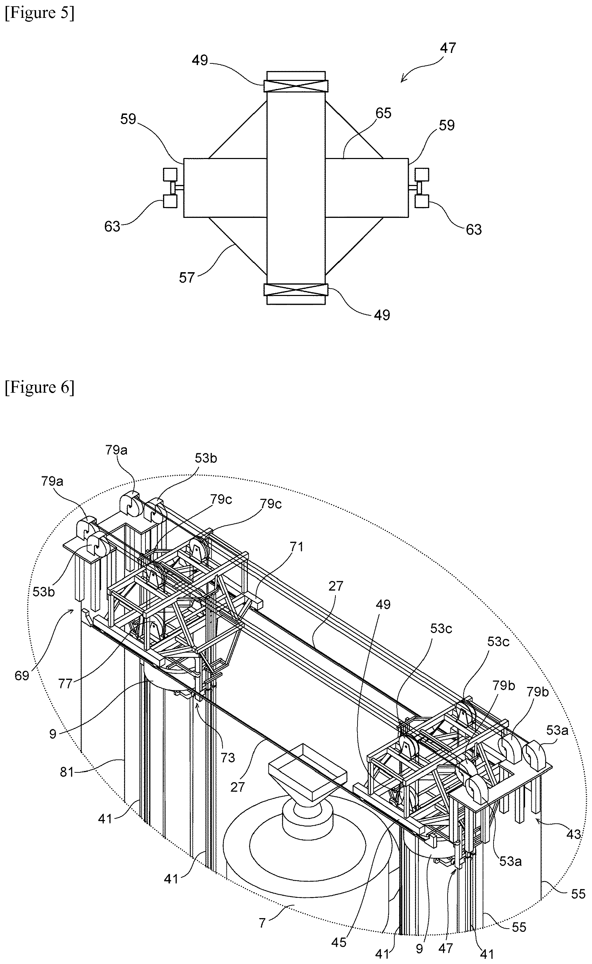

As shown in FIG. 4, the first metal hanger 47 includes: a roof portion 57 to be positioned over the bucket 9; and a pair of arm portions 59 for holding the bucket 9, which are provided so as to extend downward from the roof portion 57. Hook portions 63 (see FIG. 5) for holding the bucket 9 by supporting support portions 61 of the bucket 9 are provided at lower end portions of the arm portions 59.

As described above, the pair of movable pulleys 49 are fitted to the roof portion 57. As shown in FIGS. 4 and 5, the axial direction of each of the rotary shafts of the first movable pulleys 49 and the direction of connection between the pair of arm portions 59 are orthogonal to each other in plan view.

The reason for adopting such an arrangement is as follows.

As shown in FIG. 2, the top travel rails 27 are provided in parallel with the front-of-oven rails 3 and, in order to cause the first travelling trolley 45 to run in parallel with the front-of-oven rails 3, it is necessary to set the axial direction of each of the rotary shafts of the pulleys orthogonal to the front-of-oven rails 3.

On the other hand, the first traverser rails 37 are provided so as to be orthogonal to the front-of-oven rails 3 and it is necessary to cause the bucket to move along the first traverser rails 37 to slide into the space between the pair of arm portions 59 of the first metal hanger 47 disposed between the two guide rails 41. For this reason, the two guide rails 41 are disposed so as to straddle the first traverser rails 37 and the arm portions 59 are disposed similarly to these guide rails 41.

Consequently, the direction of the rotary shaft of the first movable pulleys 49 and the direction of connection between the pair of arm portions 59 are orthogonal to each other.

When the first metal hanger 47, of which the arm portion 59 and the first movable pulleys 49 are arranged as described above, is used, it becomes possible to provide the top travel rails 27 extending in parallel with the front-of-oven rails 3 on both sides of the quenching tower 7, so that it is possible to hoist the bucket 9 transported via the first traverser 19 to the top portion of the first hoist tower 15 with the use of the first hoist 17 and to transport the bucket 9 to the position over the quenching tower 7 via the first travelling trolley 45.

Since the load of the bucket 9 is transmitted to the roof portion 57 of the first metal hanger 47 via the arm portions 59 and the load in the direction of hoisting is transmitted to the roof portion 57 via the first movable pulleys 49, angular difference of approximately 90 degrees occurs with regard to the load supporting points of the roof portion 57 when the above-described arrangement is adopted. As a result, the load exerted to the roof portion 57 of the metal hanger 47 becomes greater than the load exerted when the direction of each of the rotary shafts of the first movable pulleys 49 and the direction of connection between the pair of arm portions 59 are parallel to each other, that is, the load exerted when the first movable pulleys 49 are positioned over the arm portions 59. For this reason, in this embodiment, as shown in FIG. 4, a plurality of rib members 65 are provided on the roof portion 57 in the direction perpendicular to the direction of each of the rotary shafts of the first movable pulleys 49 to increase the rigidity.

### <First Traverser>

The first traverser 19 includes the first traverser rails 37 laid between the front-of-oven rails 3 and the first hoist position P1 and is configured so as to be able to transfer the sub-carriage 31 carrying the bucket 9 to and from the first front-of-oven car 11 or the second front-of-oven car 13 on the front-of-oven rails 3 at a first transfer position P2 (see FIGS. 1 and 2), and to cause the sub-carriage 31 carrying the bucket 9 to travel on the first traverser rails 37 between the first transfer position P2 and the first hoist position P1.

As shown in FIGS. 1 and 2, the first transfer position P2 is a position, at which the first front-of-oven car 11 or the second front-of-oven car 13 on the front-of-oven rails 3 transfers the sub-carriage 31 to and from the first traverser 19.

The first hoist position P1 is a position on the first traverser rails 37 under the guide rails 41, that is, a position where the bucket 9 is positioned so as to be able to be hoisted.

The first traverser 19 of this embodiment has a tow carriage 67, connectable to the sub-carriage 31, as a mechanism for causing the sub-carriage 31 to travel back and forth and is configured to pull the tow carriage 67 with a wire rope (not shown) to tow the sub-carriage 31 via the tow carriage 67.

However, when the sub-carriage 31 is a self-propelled type carriage, it becomes unnecessary to provide the first traverser 19 with a mechanism for causing the sub-carriage 31 to travel.

### <Second Hoist Tower>

The second hoist tower 21 is placed at a second hoist position P3 adjacent to the quenching tower 7 on the side opposite to the first hoist position P1 with respect to the quenching tower 7 and is provided with guide rails 41 extending in the vertical direction.

A tower top portion of the second hoist tower 21 is fitted with second fixed pulleys 79a of the second hoist 23 and second fixed pulleys 79b of the first hoist 17.

### <Second Hoist>

The second hoist 23 is a rope trolley-type hoist as in the case of the first hoist 17, including: a second hoisting device 69 configured to be able to hoist the bucket 9 to a position higher than the top portion of the quenching tower 7 along the guide rails 41 of the second hoist tower 21 independently of the first hoist 17; and a second travelling trolley 71 that transports the hoisted bucket 9 to the charging position set over the top portion of the quenching tower 7 by travelling on the top travel rails 27 in a state where the hoisted bucket 9 is hung.

In FIG. 2, part of the second hoist tower 23 other than the tower top portion and the guide rails 41 are omitted.

The second hoisting device 69 includes: a second metal hanger 73 that holds the bucket 9; second movable pulleys 77 fitted to an upper portion of the second metal hanger 73; a second hoist driving device 75 that is installed near a lower portion of the second hoist tower 21; the second fixed pulleys 79a fitted to the tower top portion of the second hoist tower 21; the second fixed pulleys 79b fitted to the tower top portion of the first hoist tower 15; second fixed pulleys 79c fitted to an upper portion of the second travelling trolley 71; and second wire ropes 81 that are wound around the pulleys and reeled in and out by the second hoist driving device 75. The second metal hanger 73 is configured similarly to the first metal hanger 47.

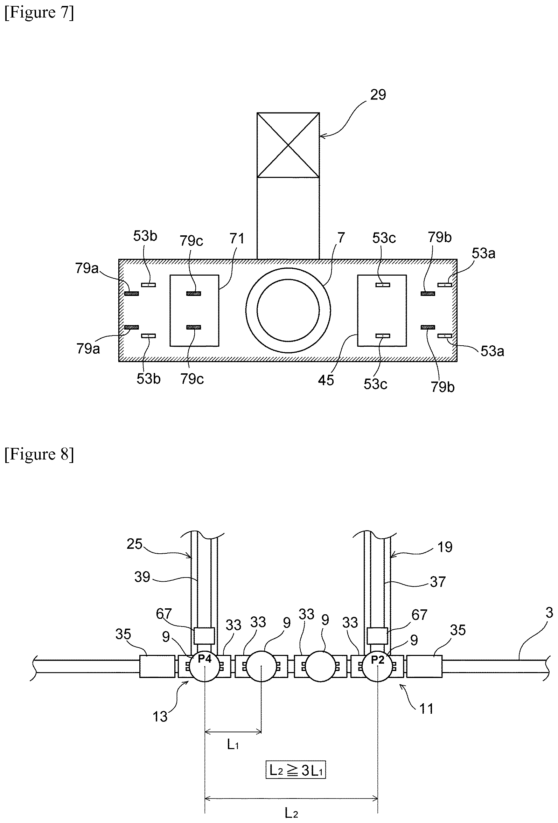

In this embodiment, the pulleys are arranged to be offset from each other in the rotational axis direction of the pulleys so that the first wire ropes 55 on the first hoisting device 43 side and the second wire ropes 81 of the second hoisting device 69 side do not interfere with each other. Specifically, as shown in FIGS. 6 and 7, the distance between the pulleys of the first hoisting device 43 is set to be large and the distance between the pulleys of the second hoisting device 69 is set to be small. As a result, even when the rope trolley-type hoists are used for both hoists, it is possible to arrange the wire ropes so as not to interfere with each other.

### <Second Traverser>

The second traverser 25 is configured in the same manner as the first traverser 19. That is, the second traverser 25 includes the second traverser rails 39 laid between the front-of-oven rails 3 and the second hoist position P3 and is configured so as to be able to transfer the sub-carriage 31 carrying the bucket 9 to and from the first front-of-oven car 11 or the second front-of-oven car 13 on the front-of-oven rails 3 at a second transfer position P4, and to cause the sub-carriage 31 carrying the bucket 9 to travel on the second traverser rails 39 between the second transfer position P4 and the second hoist position P3.

### <Disposition of First Transfer Position and Second Transfer Position>

As shown in FIGS. 1 and 2, each of the first front-of-oven car 11 and the second front-of-oven car 13 of this embodiment has two carriages 33 connected to each other, each of which can carry the bucket 9. Irrespective of the number of carriages to be towed and the shape of the carriages, the distance between the first transfer position P2 and the second transfer position P4 is set so that the first front-of-oven car 11 and the second front-of-oven car 13 do not interfere with each other even when the first front-of-oven car 11 and the second front-of-oven car 13 stop at the first transfer position P2 and the second transfer position P4 respectively at the same time in a state where they are closest to each other.

In this embodiment, as shown in FIG. 8, the distance L₂ between the first transfer position P2 and the second transfer position P4 (more exactly, the distance L₂ between the center of the carriage 33 stopped at the first transfer position P2 and the center of the carriage 33 stopped at the second transfer position P4) is set equal to or greater than three times of the distance L₁ between the centers of the connected carriages 33, that is, set so that L₂≥3L₁ is satisfied.

By setting the distance in this manner, as shown in FIG. 8, the first front-of-oven car 11 and the second front-of-oven car 13 do not interfere with each other even when the first front-of-oven car 11 and the second front-of-oven car 13 simultaneously stop at the first transfer position P2 and the second transfer position P4 respectively and the carriages 33 of the first front-of-oven car 11 and the carriages 33 of the second front-of-oven car 13 come closest to each other.

When the distance between the first transfer position P2 and the second transfer position P4 are set in this way, the first front-of-oven car 11 and the second front-of-oven car 13 can simultaneously stop at the first transfer position P2 and the second transfer position P4 respectively. In the case of this embodiment, it is possible to freely place any of the two carriages included in the first front-of-oven car 11 at the first transfer position P2 and it is possible to freely place any of the two carriages included in the second front-of-oven car 13 at the second transfer position P4. As a result, the degree of freedom in transportation is increased, which contributes to reduction of the charge cycle time.

### <Top Travel Rails>

The top travel rails 27, which enable the first travelling trolley 45 and the second travelling trolley 71 to travel to the charging position set over the top portion of the quenching tower 7, are installed between the top portion of the first hoist tower 15 and the top portion of the second hoist tower 21.

### <Entire Layout of Devices>

In the coke dry quenching facility 1 of this embodiment, as shown in FIG. 1, the first hoist position P1, the quenching tower 7, and the second hoist position P3 are arranged in a line parallel with the front-of-oven rails 3 in plan view, so that the two travelling trolleys travel in opposing directions. Such an arrangement minimizes the entire length of the two traverser rails. It is also possible to install the hoist driving devices on the ground to avoid interference with other apparatuses even when each of the first hoist and the second hoist is a rope trolley-type hoist.

Description on operation of the coke dry quenching facility 1 configured as described above, focusing on the charge cycle time, will be given below.

Once the bucket 9 mounted on the sub-carriage 31 of the first front-of-oven car 11 receives red-hot coke, the first front-of-oven car 11 runs on the front-of-oven rails 3 to travel to the first transfer position P2. At the first transfer position P2, the sub-carriage 31 carrying the bucket 9 is transferred to the first traverser rails 37-side and moved to the first hoist position P1 on the first traverser rails 37. At the first hoist position P1, the bucket 9 is hoisted to a predetermined position higher than the quenching tower 7 along the guide rails 41 in a state where the bucket 9 is held by the first metal hanger 47. When the bucket 9 is hoisted to the predetermined position, the first travelling trolley 45 runs on the top travel rails to travel to the red-hot coke charging position, which is set over the quenching tower 7, and the red-hot coke in the bucket 9 is charged into the quenching tower 7 at the charging position.

The empty bucket 9 after charging the red-hot coke into the quenching tower 7 is moved by the route inverse to the above route and is mounted on the first front-of-oven carriage 11. The bucket 9 receives newly discharged red-hot coke and is moved by the above route to charge the red-hot coke into the quenching tower 7 repeatedly.

Once the bucket 9 mounted on the sub-carriage 31 of the second front-of-oven car 13 receives red-hot coke, the second front-of-oven car 13 runs on the front-of-oven rails 3 to travel to the second transfer position P4. At the second transfer position P4, the sub-carriage 31 carrying the bucket 9 is transferred to the second traverser rails 39-side and moved to the second hoist position P3 on the second traverser rails 39. At the second hoist position P3, the bucket 9 is hoisted to a predetermined position higher than the quenching tower 7 along the guide rails 41 in a state where the bucket 9 is held by the second metal hanger 73. When the bucket 9 is hoisted to the predetermined position, the second travelling trolley 71 runs on the top travel rails to travel to the red-hot coke charging position, which is set over the quenching tower 7, and the red-hot coke in the bucket 9 is charged into the quenching tower 7 at the charging position.

The empty bucket 9 after charging the red-hot coke into the quenching tower 7 is moved by the route inverse to the above route and is mounted on the second front-of-oven carriage 13. The bucket 9 receives newly discharged red-hot coke and is moved by the above route to charge the red-hot coke into the quenching tower 7 repeatedly.

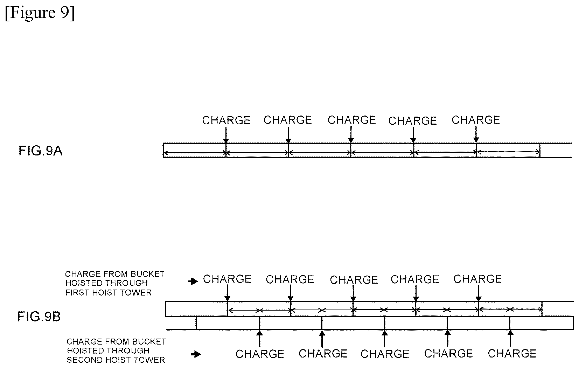

As described above, the coke dry quenching facility 1 of this embodiment is configured so that, during normal operation, the red-hot coke in the bucket 9 hoisted through the first hoist tower 15 and the red-hot coke in the bucket 9 hoisted through the second hoist tower 21 are all charged into the quenching tower 7. As a result, it is possible to perform charging of red-hot coke alternately from the bucket 9 hoisted through the first hoist tower 15 and from the bucket 9 hoisted through the second hoist tower 21. When charging is performed alternately, as compared to the case of one hoist tower as shown in FIG. 9A, it is possible to reduce the charge cycle time in half at the maximum as shown in FIG. 9B. In this way, it is possible to use a large capacity coke dry quenching facility 1.

Furthermore, the facility is configured so that, when it becomes necessary to stop one of the bucket transporting systems, that is, one of the first hoist tower 15-side system and the second hoist tower 21-side system, it is possible to operate the facility by charging red-hot coke into the quenching tower from the bucket transported through the other of the bucket transporting systems, that is, the other of the first hoist tower 15-side system and the second hoist tower 21-side system. For this reason, even in the case where a trouble occurs in one of the bucket transporting systems or in the case where one of the bucket transporting systems is inspected, for example, although the charging frequency is lowered, it is possible to continue operation with the use of the other of the bucket transporting systems.

The bucket transporting system on the first hoist tower 15-side includes the first traverser 19, the first hoist 17, and the first travelling trolley 45, and the bucket transporting system on the second hoist tower 21-side includes the second traverser 25, the second hoist 23, and the second travelling trolley 71.

In this embodiment, rope trolley-type hoists are used as the hoists 17 and 23 to hoist the buckets 9 to the upper portions of the hoist towers 15 and 21, so that it is possible to install the first hoist driving device 51 and the second hoist driving device 75, which are constituent elements of the first hoisting device 43 and the second hoisting device 69 respectively, on a stationary floor on the ground, for example, instead of installing these devices at upper portions of the hoist towers 15 and 21. For this reason, as compared to the case where top crane-type hoists are used, it is possible to significantly reduce the weight of the first travelling trolley 45 and the second travelling trolley 71, which are disposed at the upper portions of the hoist towers 15 and 21. Consequently, a facility is obtained, with which it is possible to charge red-hot coke into the quenching tower 7 from two directions without excessive increase in the facility cost, because weight is not excessively increased even when the two travelling trolleys 45 and 71 are installed on the top travel rails 27.

However, the first hoisting device 43 and the second hoisting device 69 of the present invention are not limited to the rope trolley-type hoists but may be the top crane-type hoists provided to the first travelling trolley 45 and the second travelling trolley 71.

While the present invention has been described with reference to the embodiment, the present invention is not limited to the above-described embodiment. The scope of the present invention is determined based on the attached claims and all the configurations obtained by omitting, changing, and/or improving the constituent elements within the scope of the present invention are also included in the present invention.

### Description of Reference Numerals

- 1:: coke dry quenching facility
- 3:: front-of-oven rail
- 5:: coke oven
- 7:: quenching tower
- 9:: bucket
- 11:: first front-of-oven car
- 13:: second front-of-oven car
- 15:: first hoist tower
- 17:: first hoist
- 19:: first traverser
- 21:: second hoist tower
- 23:: second hoist
- 25:: second traverser
- 27:: top travelling rail
- 29:: boiler
- 31:: sub-carriage
- 33:: carriage
- 35:: locomotive
- 37:: first traverser rail
- 39:: second traverser rail
- 41:: guide rail
- 43:: first hoisting device
- 45:: first travelling trolley
- 47:: first metal hanger
- 49:: first movable pulley
- 51:: first hoist driving device
- 53a, b, c:: first fixed pulley
- 55:: first wire rope
- 57:: roof portion
- 59:: arm portion
- 61:: support portion
- 63:: hook portion
- 65:: rib member
- 67:: tow carriage
- 69:: second hoisting device
- 71:: second travelling trolley
- 73:: second metal hanger
- 75:: second hoist driving device
- 77:: second movable pulley
- 79a, b, c:: second fixed pulley
- 81:: second wire rope
- P1:: first hoist position
- P2:: first transfer position
- P3:: second hoist position
- P4:: second transfer position

## Claims

1. A coke dry quenching facility for quenching and cooling red-hot coke discharged from a coke oven, on coke discharge-side of which front-of-oven rails are laid, and recovering waste heat, the coke dry quenching facility comprising:
a quenching tower placed at a position away from the front-of-oven rails on the coke discharge-side of the coke oven;
a first front-of-oven car and a second front-of-oven car, each of which is configured to run on the front-of-oven rails in a state where a sub-carriage carrying a bucket for receiving the red-hot coke is mounted thereon;
a first hoist tower placed at a first hoist position adjacent to the quenching tower, the first hoist tower including guide rails extending in a vertical direction;
a first hoist that includes a first hoisting device and a first travelling trolley, the first hoisting device being configured to be able to hoist the bucket to a position higher than a top portion of the quenching tower along the guide rails of the first hoist tower, the first travelling trolley being configured to transport the hoisted bucket to a charging position set over the top portion of the quenching tower in a state where the hoisted bucket is hung;
a first traverser that includes first traverser rails laid between the front-of-oven rails and the first hoist position, the first traverser being configured to transfer the sub-carriage carrying the bucket to and from the first front-of-oven car or the second front-of-oven car on the front-of-oven rails at a first transfer position and configured to cause the sub-carriage carrying the bucket to travel on the first traverser rails between the first transfer position and the first hoist position;
a second hoist tower placed at a second hoist position adjacent to the quenching tower on a side opposite to the first hoist position with respect to the quenching tower, the second hoist tower including guide rails extending in the vertical direction;
a second hoist that includes a second hoisting device and a second travelling trolley, the second hoisting device being configured to be able to hoist the bucket to a position higher than the top portion of the quenching tower along the guide rails of the second hoist tower independent of the first hoist, the second travelling trolley being configured to transport the hoisted bucket to the charging position set over the top portion of the quenching tower in a state where the hoisted bucket is hung;
a second traverser that includes second traverser rails laid between the front-of-oven rails and the second hoist position, the second traverser being configured to transfer the sub-carriage carrying the bucket to and from the first front-of-oven car or the second front-of-oven car on the front-of-oven rails at a second transfer position and configured to cause the sub-carriage carrying the bucket to travel on the second traverser rails between the second transfer position and the second hoist position; and
top travel rails installed only between the top portion of the first hoist tower and the top portion of the second hoist tower, the top travel rails enabling the first traveling trolley and the second travelling trolley to travel to the charging position set over the top portion of the quenching tower, wherein
the coke dry quenching facility is configured to charge all of the red-hot coke in the bucket hoisted through the first hoist tower and the red-hot coke in the bucket hoisted through the second hoist tower into the quenching tower during normal operation, and
the coke dry quenching facility is configured so that, when it becomes necessary to stop one of a first hoist tower-side bucket transporting system and a second hoist tower-side bucket transporting system, the coke dry quenching facility is operated by charging red-hot coke into the quenching tower from the bucket transported through the other of the first hoist tower-side bucket transporting system and the second hoist tower-side bucket transporting system.

2. The coke dry quenching facility according to claim 1, wherein
each of the first hoist and the second hoist is a rope trolley-type hoist.

3. The coke dry quenching facility according to claim 1 or 2, wherein
the first hoist position, the quenching tower, and the second hoist position are arranged in a line parallel with the front-of-oven rails in plan view.

4. The coke dry quenching facility according to any one of claims 1 to 3, wherein
a distance between the first transfer position and the second transfer position is set so that the first front-of-oven car and the second front-of-oven car do not interfere with each other when the first front-of-oven car and the second front-of-oven car stop at the first transfer position and the second transfer position respectively at the same time.

5. The coke dry quenching facility according to claim 4, wherein
each of the first front-of-oven car and the second front-of-oven car includes two carriages connected to each other, each of which is configured so as to be able to mount a sub-carriage thereon, and
the distance between the first transfer position and the second transfer position is set equal to or greater than three times of a distance between centers of the carriages connected to each other.

6. The coke dry quenching facility according to any one of claims 1 to 5, wherein
the quenching tower has a processing capacity equal to or greater than 160 t/h.

7. The coke dry quenching facility according to any one of claims 1 to 6, wherein
each of the first hoist and the second hoist includes a metal hanger for supporting the bucket when the bucket is hoisted, wherein the metal hanger has a roof portion to be positioned over the bucket, a pair of arm portions for holding the bucket, which extend downward from the roof portion, and pulleys provided on the roof portion, wherein a direction of connection between the pair of arm portions and an axial direction of each of rotary shafts of the pulleys are orthogonal to each other in plan view.
